# EUROPÄISCHE PATENTSCHRIFT

(11) **EP 1 813 523 B1**
(45) Veröffentlichungstag und Bekanntmachung des Hinweises auf die Patenterteilung: **09.04.2008**
(21) Anmeldenummer: 07007044.6
(22) Anmeldetag: 14.07.2005
(51) Int. Cl.: B62M 7/02, B62K 25/28, B62K 11/04

(54) **Motorrad**
Motor cycle
Moto

(30) Priorität: 14.07.2005 EP 05015290
(43) Veröffentlichungstag der Anmeldung: 01.08.2007
(62) Teilanmeldung aus: 05015290.9
(73) Patentinhaber: Bayerische Motoren Werke Aktiengesellschaft, 80809 München (DE)
(72) Erfinder: Theobald, Markus, 85764 Unterschleissheim (DE)

(56) Entgegenhaltungen:
- EP-A- 0 290 705
- EP-A- 0 725 004
- EP-A- 0 926 053
- EP-A- 1 081 033
- EP-A- 1 245 423
- EP-A- 1 302 700
- EP-A- 1 382 876
- FR-A- 2 738 544
- GB-A- 229 782
- GB-A- 558 387
- GB-A- 1 567 774
- GB-A- 2 069 949
- US-A- 4 132 281
- US-A- 4 265 330
- US-A- 4 603 754
- US-A- 5 348 112
- US-A1- 2002 063 004
- US-A1- 2003 106 733
- US-A1- 2004 124 031
- US-B1- 6 213 239
- US-B1- 6 397 964

## Beschreibung

Die vorliegende Erfindung betrifft ein Motorrad gemäß dem Oberbegriff des Patentanspruches 1, wie es auch von der US-A-4,265,330 gezeigt wird.

### Stand der Technik

Bei herkömmlichen Motorrädern mit Ketten- bzw. Riementrieb ist das Ritzel, das die Kette bzw. den Antriebsriemen antreibt, üblicherweise mindestens circa 65 mm versetzt in Bezug auf die Achse angeordnet, an der die Hinterradschwinge angelenkt ist. Die Kupplung ist bei herkömmlichen Motorrädern üblicherweise auf der Getriebeeingangswelle angeordnet. In einer Seitenansicht des Motorrads gesehen "überdeckt" die Kupplung somit die Getriebeabtriebswelle. Unter der Getriebeabtriebswelle wird im folgenden die Welle verstanden, auf der das Ritzel angeordnet ist, welches die Kette bzw. den Riemen antreibt, welche bzw. welcher wiederum das Hinterrad antreibt. Üblicherweise befindet sich die Getriebeabtriebswelle vorderhalb der Schwingenachse.

Derartige herkömmliche Motorradkonzepte haben eine ganze Reihe von Nachteilen. Aufgrund des Versatzes von Kettenritzel und Schwingenachse ist ein gewisser Kettendurchhang erforderlich. Insbesondere bei geländegängigen Motorrädern, die einen Federweg von 150 mm und mehr haben, ist ein beträchtlicher Kettendurchhang erforderlich. Bei einem Motorrad mit einem Federweg von 300 mm ist beispielsweise ein Kettendurchhang von etwa 70mm erforderlich.

Ein großer Kettendurchhang führt zu relativ starken Reibungsverluste und erfordert eine spezielle Kettenführung. Bei einem großen Kettendurchhang ergibt sich auch ein hoher Kettenverschleiß. Eine weitere Folge des großen Kettendurchhangs können starke Laufgeräusche durch "Kettenpeitschen" sein. Eine "Kapselung" der Kette ist insbesondere bei großem Kettendurchhang konstruktiv aufwendig.

Ein weiteres Problem herkömmlicher Motorradkonzepte ist darin zu sehen, dass der Ritzeldurchmesser durch den für eine Schwenkbewegung der Schwinge erforderlichen Freigang gegenüber der Schwingenlagerung begrenzt ist. Problematisch ist ferner, dass der Schwingenholm neben bzw. unter dem Zugtrumm der Kette angeordnet ist, was ein relativ großes Stichmaß der Schwingenholme impliziert und im Fall einer Einarmschwinge die Konstruktion sehr aufwendig macht, weil zwischen dem Hinterrad und der Abtriebswelle des Getriebes noch das Motorgehäuse und die Schwingenlagerung mit einem Versatz in Bezug auf die Getriebeabtriebswelle untergebracht werden müssen. Da bei herkömmlichen Motorrädern die Schwingenholme immer zwischen dem oberen und dem unteren Kettentrumm liegen müssen, befindet sich die untere Federbeinanbindung auf einem relativ niedrigen Niveau, was sich wiederum ungünstig auf die Federbeinprogression auswirkt.

Wie bereits erwähnt ist die Kupplung bei herkömmlichen Motorrädern üblicherweise auf der Getriebeeingangswelle angeordnet. Auf der Getriebeeingangswelle treten bereits recht hohe Drehmomente auf. Um diese hohen Drehmomente dauerhaft übertragen zu können, muss die Kupplung relativ groß sein oder im Ölbad laufen. Ölbadkupplungen haben den Nachteil, dass sie zu einer relativ schnellen Verschmutzung des Öls führen können.

Bei herkömmlichen Motorrädern ist auch der Rahmen üblicherweise relativ aufwendig gestaltet. Die Rahmenverbindung zwischen dem Lenkkopf und der hinter der Getriebeabtriebswelle liegenden Schwingenachse muss an dem relativ groß bauenden Kupplungskorb vorbeigeführt werden. Bei herkömmlichen Motorrädern, bei denen die Schwingenachse hinter dem Antriebsritzel angeordnet ist, weist der Rahmen üblicherweise Rahmenrohre auf, die sich unterhalb des Motors am Kupplungsgehäuse vorbei zu den Schwingenanlenkpunkten erstrecken. Derartige Rahmenkonstruktionen implizieren einen ungünstigen Kraftfluss und sind auch relativ schwer und in der Herstellung teuer. Bei derartigen Rahmen gestaltet sich auch die Motormontage relativ schwierig, da der Motor und das Getriebe sehr eng in den Rahmen "eingebettet" sind.

Bereits vor vielen Jahrzehnten wurde erkannt, dass es von Vorteil wäre, wenn man das Antriebsritzel, das zum Antrieb der Kette bzw. des Antriebsriemens vorgesehen ist, koaxial zur Schwingenachse anordnen würde. Konzeptartige Ansätze sind beispielsweise in der US 6 755 272 B2, GB 558 387, FR 2370 625, WO 02/094649 A1 oder der EP 592 655 B1 beschrieben. Bei den dort beschriebenen Motorrädern sitzt das Antriebsritzel aber nicht auf der Getriebeausgangswelle, sondern auf einer separaten Welle, welche über einen Ketten- oder Riemenantrieb von der Getriebeausgangswelle angetrieben wird. Dies ist konstruktiv relativ umständlich und hat sich daher auch nicht durchgesetzt.

In dem von Jürgen Stoffregen verfassten Lehrbuch "Motorradtechnik, 5. Auflage, Vieweg-Verlag, ATZ MTZ-Fachbuch, Seite 295 - 298 ist ebenfalls die Grundidee beschrieben, das Kettenritzel koaxial zur Schwingenachse anzuordnen. Eine konkrete Beschreibung, wie das Kettenritzel angetrieben werden könnte, und wie das Kettenritzel in Bezug auf das Getriebe angeordnet sein soll, liefert Stoffregen jedoch nicht.

Zum technischen Hintergrund kann auch noch die FR 1038 140 gezählt werden.

Aufgabe der Erfindung ist es, ein völlig neues und konstruktiv einfach zu realisierendes Motorradkonzept zu schaffen, welches es ermöglicht die eingangs beschriebenen Probleme des Kettendurchhangs zu vermeiden und das ferner eine einfache und hinsichtlich des Kraftflusses optimierte Rahmenkonstruktion ermöglicht.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt einer Ausführungsform der Erfindung gemäß Patentanspruch 1 ist ein Motorrad mit einem Rahmen, einer Hinterradschwinge, die auf einer Schwingenachse schwenkbar in Bezug auf den Rahmen angeordnet ist und einem Getriebe. Das Getriebe weist ein Getriebegehäuse und eine aus dem Getriebegehäuse herausstehende Getriebeausgangswelle auf. Auf der Getriebeausgangswelle ist ein "Getriebeausgangsritzel" angeordnet, welches über ein Zugmittel, wie z. B. über eine Kette oder einen Zahnriemen, mit einem im Hinterradbereich des Motorrads angeordneten Kettenrad gekoppelt ist.

Der Kern der Erfindung besteht darin, dass das auf der Getriebeausgangswelle angeordnete Getriebeausgangsritzel koaxial zur Schwingenachse angeordnet ist. Eine koaxiale Anordnung des Getriebeausgangsritzels, d. h. des Ritzels, welche die Kette bzw. den Riemen antreibt, und der Schwingenachse hat den Vorteil, dass für das Einfedern der Hinterradschwinge praktisch kein Durchhang des "Zugmittels", d. h. der Antriebskette bzw. des Antriebsriemens vorgehalten werden muss, wie dies bei herkömmlichen Motorrädern mit Ketten- bzw. Riemenantrieb der Fall ist. Die mit einem Kettendurchhang verbundenen Probleme werden also ursächlich vermieden.

Nach einer Weiterbildung der Erfindung ist vorgesehen, dass sich die Schwingenachse, d. h. die Schwenkachse, um welche die Hinterradschwinge schwenkt, durch das Getriebe- Motorgehäuse hindurch erstreckt. Wenn im Folgenden von "Getriebegehäuse" die Rede ist, so ist dieser Begriff breit auszulegen. Unter dem Begriff "Getriebegehäuse" ist in der folgenden Beschreibung und in den Patentansprüchen ganz allgemein das Gehäuse des Getriebes und/oder des Motors zu verstehen. Die sich durch das Getriebegehäuse hindurch erstreckende Schwingenachse steht auf einander gegenüberliegenden Seiten des Getriebegehäuses aus dem Getriebegehäuse heraus. Enden der Schwingenachse können dann schwenkbar im Rahmen des Motorrads gelagert sein. Die Schwingenachse kann durch Wälzlager oder durch Gleitlager im Rahmen gelagert sein. Für die Lagerung der Schwingenachse im Rahmen können beispielsweise Kegelrollenlager verwendet werden. Die Kegelrollenlager können beispielsweise in O-Anordnung angeordnet werden.

Ausdrücklich sei darauf hingewiesen, dass die Schwinge nicht notwendigerweise im Rahmen gelagert sein muss. Die Schwinge kann auch mittels Lagern, z.B. Nadellagern an bzw. auf der Getriebeausgangswelle gelagert sein, sofern die Getriebeausgangswelle und das Motor/Getriebegehäuse hinreichend stabil ausgeführt sind, um die von über die Schwinge eingeleiteten Kräfte abzustützen.

Die Hinterradschwinge kann fest mit der Schwingenachse verbunden sein. Eine einfache Möglichkeit besteht darin, die Hinterradschwinge mittels einer Klemmverbindung auf der Schwingenachse festzuklemmen.

Die Getriebeausgangswelle, auf der das Getriebeausgangsritzel angeordnet ist, ist im Getriebegehäuse vorzugsweise durch Wälzlager gelagert.

Nach einer Weiterbildung der Erfindung ist vorgesehen, dass die Getriebeausgangswelle als Hohlwelle ausgebildet ist. Dies hat den Vorteil, dass die Schwingenachse ganz einfach durch die Getriebeausgangswelle hindurch gesteckt sein kann, was eine sehr einfache Montage und Demontage der Hinterradschwinge ermöglicht.

Das oben beschriebene Grundprinzip der Erfindung ermöglicht die Realisierung einer ganzen Reihe vorteilhafter konstruktiver Details.

Nach einer Weiterbildung der Erfindung weist das Motorrad einen Motor auf, der so eingebaut ist, dass sich die Kurbelwelle des Motors in einer Querrichtung, d. h. parallel zur Schwingenachse erstreckt. Im Unterschied zu den meisten herkömmlichen Motorrädern, bei denen die Kupplung auf der Getriebeeingangswelle angeordnet ist, ist gemäß der Erfindung vorgesehen, dass die Kupplung koaxial zur Kurbelwelle angeordnet ist und vorzugsweise auf der Kurbelwelle selbst angeordnet ist. Da an der Kurbelwelle höhere Drehzahlen und kleinere Drehmomente auftreten als an der Getriebeeingangswelle, kann die Kupplung kleiner, d. h. mit einem geringeren Durchmesser ausgeführt sein, als bei herkömmlichen Motorrädern. Bei herkömmlichen Motorrädern, bei denen die Kupplung auf der Getriebeeingangswelle angeordnet ist, überdeckt die Kupplung, in einer Seitenansicht des Motorrads gesehen, die Getriebeausgangswelle. Bei herkömmlichen Motorrädern wäre also eine koaxiale Anordnung von Schwingenachse und Getriebeausgangsritzel überhaupt nicht möglich, da die Schwingenachse die Kupplung durchsetzen würde. Demgegenüber hat eine Anordnung der Kupplung auf der Kurbelwelle den Vorteil, dass die Kupplung kompakter ausgeführt werden kann und dass sie, in einer Seitenansicht des Motorrads gesehen, die Getriebeausgangswelle nicht überdeckt und somit ein "Durchstecken" der Schwingenachse ermöglicht. Da an der Kurbelwelle geringere Drehmomente auftreten als an der Getriebeeingangswelle können eine große Vielzahl von Kupplungstypen verwendet werden, z. B. Einscheibenkupplungen, Mehrscheibenkupplungen, Trockenkupplungen, Nasskupplungen etc.

Ein "Antriebselement" der Kupplung ist vorzugsweise drehfest mit der Kurbelwelle verbunden. Ein "Abtriebselement" der Kupplung ist drehbar in Bezug zur Kurbelwelle angeordnet und mit einem auf der Kurbelwelle drehbar gelagerten Primärritzel verbunden. Bei dem Abtriebselement kann es sich um einen Kupplungskorb handeln, der einstückig mit dem Primärritzel verbunden sein kann. Das Primärritzel kann mittels eines Wälzlagers oder eines Gleitlagers auf der Kurbelwelle gelagert sein. Vorzugsweise ist das Primärritzel mittels eines Nadellagers auf der Kurbelwelle gelagert.

Es kann vorgesehen sein, dass das Drehmoment von dem auf der Kurbelwelle sitzenden Primärritzel über ein auf einer Zwischenwelle angeordnetes Zwischenrad auf die Getriebeeingangswelle übertragen wird. Das Zwischenrad oder ein anderes auf der Zwischenwelle sitzendes Zahnrad kämmt also mit einem Zahnrad der Getriebeeingangswelle, die in Richtung der Hinterradschwinge versetzt in Bezug auf die Zwischenwelle angeordnet ist. Auf der Getriebeeingangswelle und auf der Getriebeausgangswelle sind nebeneinander mehrere permanent in Eingriff befindliche schaltbare Zahnradstufen angeordnet, über die die einzelnen Gänge des Getriebes geschaltet werden können.

Das oben beschriebene Grundprinzip der Erfindung ermöglicht im Unterschied zum Stand der Technik auch eine optimale Gestaltung des Rahmens.

Der Rahmen weist mindestens zwei linke und zwei rechte Rahmenrohre auf. Die linken Rahmenrohre sind im wesentlichen spiegelgleich zu den rechten Rahmenrohren. Die Rahmenrohre einer jeden Rahmenseite schneiden einander. "Schneiden" bedeutet in diesem Zusammenhang, dass sie zusammenlaufen und miteinander verbunden sind. Der Rahmen ist so gestaltet, dass sich die Schwingenachse durch den "Schnittpunkt" der linken Rahmenrohre und durch den Schnittbund der rechten Rahmenrohre erstreckt. Der Motor und das Getriebe des Motorrads können im Bereich zwischen den linken und den rechten Rahmenrohren angeordnet sein.

Die linken und die rechten Rahmenrohre können begrifflich jeweils in ein linkes und ein rechtes unteres Rahmenrohr und ein linkes und ein rechtes oberes Rahmenrohr differenziert werden. In einer Seitenansicht des Motorrads gesehen, kann vorgesehen sein, die beiden unteren Rahmenrohre im wesentlichen gerade sind und sich von der Schwingenachse nach vorne oben in einen Bereich unterhalb eines Lenkers des Motorrads erstrecken und dort beispielsweise mit einem Lenkkopflagerrohr verbunden sind. In einer Draufsicht auf das Motorrad sind die beiden unteren Rahmenrohre nicht notwendigerweise gerade, sondern können selbstverständlich gebogen sein.

Die beiden oberen Rahmenrohre sind oberhalb der unteren Rahmenrohre angeordnet und erstrecken sich von einem Bereich unterhalb des Lenkers bzw. von einem Lenkkopflagerrohr zur Schwingenachse nach hinten unten.

Ein derart gestalteter Rahmen hat vielfältige Vorteile. So kann der Motor, das Getriebe und ein Kühler des Motorrads als vormontierte Baugruppe von unten her in den Bereich zwischen die linken und die rechten Rahmenrohre eingesetzt werden, was die Montage bzw. Demontage erheblich vereinfacht. Während sich bei herkömmlichen Motorrädern mit Kettenantrieb die Rahmenrohre vom Lenkerbereich unterhalb des Motors bzw. des Getriebes zum Schwingenlager der Hinterradschwinge erstrecken, laufen die linken und die rechten Rahmenrohre des Rahmens gemäß der Erfindung seitlich am Motor bzw. am Getriebe vorbei vom Lenkerbereich schräg nach unten zur Schwingenachse. Dies wiederum hat den Vorteil, dass in einem Bereich unterhalb der unteren Rahmenrohre und vorderhalb des Motors ein durchgehender Kühler angeordnet werden kann.

Ein Luftfilter des Motors kann sehr platzsparend und vor Spritzwasser geschützt im lenkernahen Bereich zwischen den oberen und unteren Rahmenrohren oberhalb des Motors angeordnet werden.

Eine Bordbatterie des Motorrads kann in einem schwingenachsennahen Bereich zwischen den oberen und unteren Rahmenrohren oberhalb des Getriebes angeordnet sein. In diesem Bereich befindet sich auch der Schwerpunkt des Motorrads. Eine Anordnung der relativ schweren Bordbatterie im Bereich des Schwerpunkts des Motorrads verbessert das Handling des Motorrads ganz erheblich.

Der oben beschriebene Rahmen hat auch wesentliche Vorteile hinsichtlich der Anordnung des Federbeins. Das Federbein ist zwischen dem Rahmen und der Hinterachsschwinge angeordnet und hat die Aufgabe, während der Fahrt auftretende Bewegungen des Federbeins zu federn und zu dämpfen. Ein unteres Ende des Federbeins ist gelenkig mit der Schwinge verbunden. Ein oberes Ende des Federbeins ist gelenkig mit dem Rahmen verbunden. Das Federbein erstreckt sich von hinten unten nach schräg vorne oben. Bei der oben beschriebenen Rahmenkonstruktion ist es von Vorteil, das Federbein so anzuordnen, dass es, in einer Seitenansicht des Motorrads gesehen, in einer im wesentlichen geraden Verlängerung zu den vorderen Abschnitten der oberen beiden Rahmenrohren steht. Bei einer derartigen Anordnung werden die vom Federbein auf dem Rahmen ausgeübten Kräfte im wesentlichen in Längsrichtung der vorderen Abschnitte der oberen Rahmenrohre in den Rahmen eingeleitet. Die oberen Rahmenrohre fungieren also als "Druckstäbe" und werden beim Einfedern der Hinterradschwinge primär auf Druck und nur wenig auf Biegung beansprucht. Im Unterschied zu herkömmlichen Motorrädern ermöglicht der Rahmen also einen wesentlich flacheren Einbau der Federbeinstütze, was beim Einfedern des Federbeins eine hohe Progression ermöglicht.

Auch der Kraftstofftank kann bei dem oben beschriebenen Motorradkonzept in einer günstigeren, schwerpunktnäheren Position angeordnet werden als dies bei den meisten herkömmlichen Motorrädern der Fall ist. Nach einer Weiterbildung der Erfindung ist der Kraftstofftank in einem Bereich oberhalb des Federbeins und unterhalb der Sitzbank des Motorrads angeordnet. Der Tankdeckel des Kraftstofftanks kann an der Oberseite des Kraftstofftanks unterhalb der Sitzbank angeordnet sein. Zum Betanken braucht also lediglich die Sitzbank abgenommen werden. Im Vergleich zu herkömmlichen Motorrädern, bei denen der Kraftstofftank vorderhalb der Sitzbank angeordnet ist, hat eine Anordnung im Bereich oberhalb des Federbeins den Vorteil, dass sich dadurch der Schwenkpunkt des Fahrzeugs absenken lässt, was das Handling weiter verbessert.

Alternativ dazu kann in der Sitzbank auch eine Zugangsöffnung bzw. ein "Loch" vorgesehen sein, über die bzw. über das der Tankstutzen des Kraftstofftanks zugänglich ist. Eine Betankung ist dann auch ohne ein Abnehmen der Sitzbank möglich.

Im folgenden wird die Erfindung im Zusammenhang mit der Zeichnung näher erläutert. Es zeigen:
- Figur 1: eine Seitenansicht eines Motorrads gemäß der Erfindung;
- Figur 2: die Kurbelwelle und die Kupplung eines Motorrads gemäß der Erfindung;
- Figur 3: eine Seitenansicht des Motors und des Getriebes eines Motorrads gemäß der Erfindung;
- Figur 4: einen Schnitt entlang der in Figur 3 gezeigten Schnittlinie A-A;
- Figur 5: einen Querschnitt durch die Schwingenachse, die Getriebeabtriebswelle und die Hinterachsschwinge des Motorrads;
- Figur 6: eine perspektivische Ansicht eines schematisiert dargestellten Motorrads gemäß der Erfindung;
- Figur 7: eine Seitenansicht eines schematisiert dargestellten Motorrads gemäß der Erfindung;
- Figur 8: eine Draufsicht auf ein Motorrad gemäß der Erfindung; und
- Figur 9: die Hinterradschwinge und das daran gelagerte Hinterrad eines Motorrads gemäß der Erfindung.

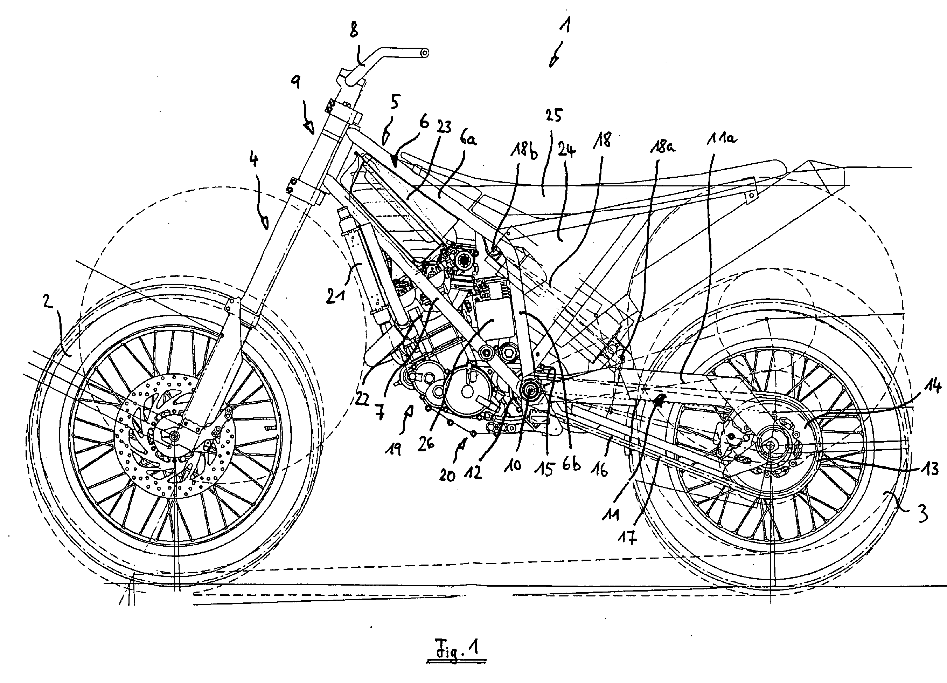

Figur 1 zeigt ein Motorrad 1 mit einem Vorderrad 2 und einem Hinterrad 3. Das Vorderrad 2 ist über eine Teleskopgabel 4 mit einem Rahmen 5 des Motorrads 1 verbunden. In der in Figur 1 dargestellten Seitenansicht sind von dem Rahmen 5 ein oberes linkes Rahmenrohr 6 und ein unteres linkes Rahmenrohr 7 zu erkennen. Das obere linke Rahmenrohr 6 kann in einen vorderen Abschnitt 6a und einen hinteren Abschnitt 6b unterteilt werden. Im Übergangsbereich zwischen den Rahmenrohrabschnitten 6a, 6b ist das obere linke Rahmenrohr 6 gebogen. Der vordere Abschnitt 6a ist in der in Figur 1 gezeigten Seitenansicht im wesentlichen gerade. Das untere linkere Rahmenrohr 7 ist in der in Figur 1 gezeigten Seitenansicht ebenfalls im wesentlichen gerade. Die beiden Rahmenrohre 6, 7 erstrecken sich von einem Bereich unterhalb eines Lenkers 8 von einem Lenkkopflager 9 schräg nach hinten unten. Der Abschnitt 6b des oberen linken Rahmenrohrs 6 "schneidet" das untere linke Rahmenrohr 7.

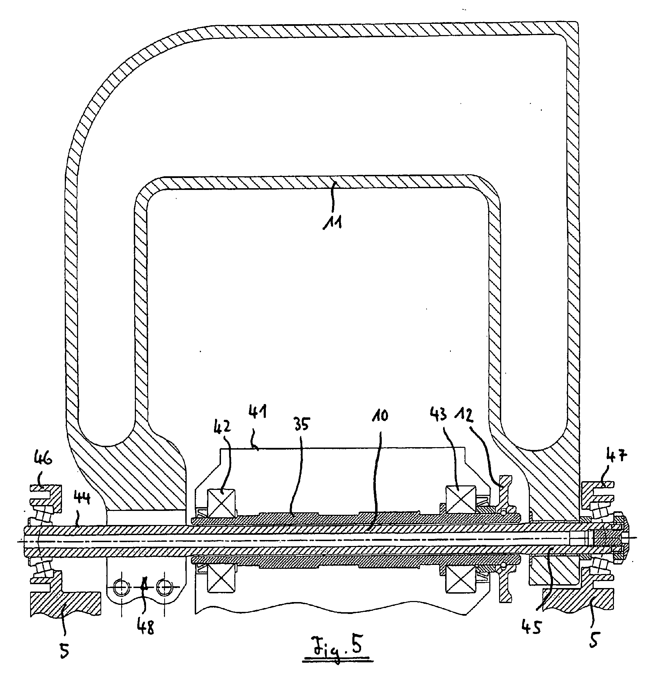

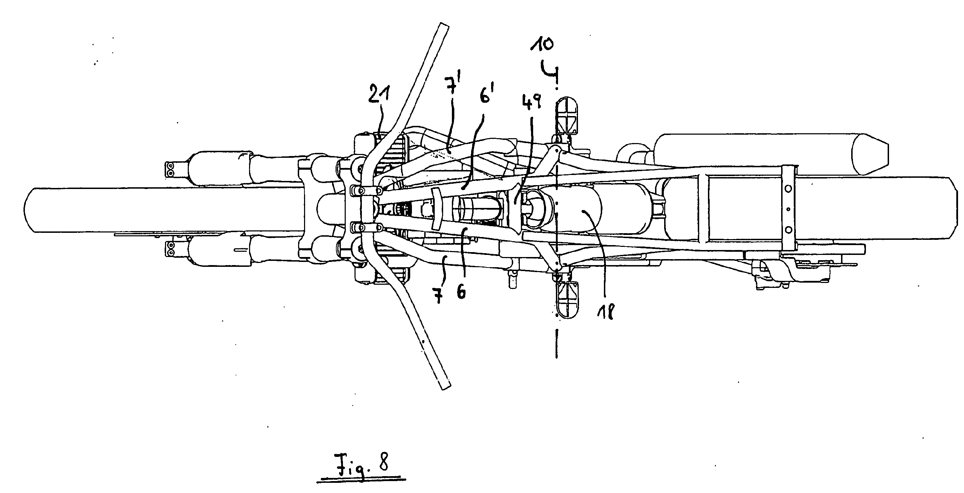

Wie am besten aus Figur 8 ersichtlich ist, ist der Rahmen 5 bezüglich einer Mittellängsachse des Motorrads im wesentlichen symmetrisch aufgebaut. Der Rahmen weist also ein dem oberen linken Rahmenrohr 6 entsprechendes oberes rechtes Rahmenrohr 6' und einem dem unteren linken Rahmenrohr 7 entsprechendes unteres rechtes Rahmenrohr 7' auf. Durch die "Schnittpunkte" der Rahmenrohre 6, 7 bzw. 6', 7' erstreckt sich eine Schwingenachse 10, die in Figur 8 gestrichelt dargestellt ist. Die Schwingenachse 10 ist am besten aus Figur 5 ersichtlich. An der Schwingenachse 10 ist die Hinterradschwinge 11 (vgl. Figur 5) befestigt. Die Hinterradschwinge 11 ist also über die Schwingenachse 10 schwenkbar in Bezug auf den Rahmen 5 angeordnet. Wie ebenfalls am besten aus Figur 5 ersichtlich ist, ist koaxial zur Schwingenachse 10 ein Getriebeausgangsritzel 12 angeordnet, welches eine Kette 13 des Motorrads antreibt. Das Getriebeausgangsritzel 12 ist über die Kette 13 mit einem Kettenrad 14 gekoppelt, welches das Hinterrad 3 antreibt.

Wie aus Figur 1 ersichtlich ist, ist der Oberzug 11a der Hinterradschwinge hohl. Ein Zugtrum 15 der Kette 13 erstreckt sich durch den Oberzug 11a der Hinterradschwinge 11. Das Obertrum 11a dient also zugleich als Kettenschutz. Ein Untertrum 16 der Kette 13 läuft durch einen Schlauchmantel 17 und ist somit ebenfalls geschützt.

Es sei ausdrücklich darauf hingewiesen, dass die Kette nicht notwendigerweise den Oberzug der Hinterradschwinge hindurchgeführt sein muss, sondern auch "außerhalb" angeordnet sein kann.

Zwischen dem Rahmen 5 und der Hinterradschwinge 11 ist ein Federbein 18 angeordnet. Wie aus Figur 1 ersichtlich ist, ist das Federbein 18 im Vergleich zu herkömmlichen Motorrädern relativ flach angeordnet. Ein hinteres unteres Ende 18a des Federbeins 18 ist gelenkig mit der Hinterradschwinge 11 verbunden. Ein vorderes oberes Ende 18b des Federbeins 18 ist gelenkig mit einem hier nicht näher dargestellten Querrohr des Rahmens 5 verbunden. Wie aus Figur 1 ersichtlich ist, steht das Federbein 18 in der hier dargestellten Seitenansicht des Motorrads im wesentlichen in einer geraden Verlängerung zu den oberen Rahmenrohr 6. Dadurch ergibt sich eine sehr günstige Krafteinleitung in den Rahmen 5. Die oberen Rahmenrohre 6, 6' (vgl. Figur 8) werden dabei also primär auf Druck beansprucht. Aufgrund der relativ "flachen" Anordnung des Federbeins 18 ergibt sich beim Einfedern das Hinterrads 3 auch eine relativ hohe Federprogression, was sich ebenfalls günstig auf das Fahrverhalten des Motorrads 1 auswirkt. Die Federprogression ist wesentlich höher als bei herkömmlichen Motorrädern, bei denen das Federbein steiler eingebaut ist.

Wie aus Figur 1 ersichtlich ist, ist der Rahmen 5 des Motorrads 1 nach unten im wesentlichen offen. Dies hat den Vorteil, dass der Motor 19, das Getriebe 20 und ein Kühler 21 als "vormontierte Powerunit" bei der Montage des Motorrads 1 in einfacher Weise von unten in den Rahmen 5 eingesetzt werden können, was den Montagaufwand im Vergleich zu herkömmlichen Motorrädern, bei denen sich unterhalb des Motors bzw. des Getriebes Rahmenrohre erstrecken, wesentlich vereinfacht.

Die oben beschriebene Rahmenkonzeption in Verbindung mit der koaxialen Anordnung der Schwingenachse 10 und des Getriebeausgangsritzels 12 ermöglicht eine Einbauposition des Motors 19 und des Getriebes 20, bei der der Motor 19 im Vergleich zu herkömmlichen Motorrädern ein Stück weiter hinten angeordnet ist und der Zylinder des in Figur 1 dargestellten Einzylindermotors sich vergleichsweise flach nach vorne oben erstreckt.

Im Bereich unterhalb des Lenkers 8, hinter dem Lenkkopflager 9 und zwischen den oberen Rahmenrohren 6, 6' und den unteren Rahmenrohren 7, 7' ist eine sogenannte "Airbox" angeordnet, welche einen Luftfilter beinhaltet, über den der Motor 19 mit Ansaugluft versorgt wird. Da die Airbox relativ leicht ist und somit das Handling des Motorrads nur wenig beieinträchtigt, ist sie relativ weit oben am Motorrad 1 angeordnet, etwa dort, wo sich bei herkömmlichen Motorrädern der Tank befindet.

Aufgrund der relativ flachen Position des Federbeins 18 kann der Kraftstofftank in einer günstigen, schwerpunktnäheren Position angeordnet werden, als dies bei den meisten herkömmlichen Motorrädern der Fall ist. Der Kraftstofftank 24 befindet sich in einer Position oberhalb des Federbeins 18 und unterhalb einer Sitzbank 25 des Motorrads 1. Der Kraftstofftank 24 ist also relativ nahe des Schwerpunkts des Motorrads, der in etwa im Bereich des Federbeins 18 liegt, angeordnet. Durch die schwerpunktnahe Anordnung des Kraftstofftanks 24 verbessert sich das Handling des Motorrads 1.

Eine weitere relativ schwere Fahrzeugkomponenten ist die Bordbatterie 26. Die Bordbatterie 26 ist in einem Bereich schräg oberhalb bzw. vorderhalb der Schwingenachse 10 zwischen den oberen Rahmenrohren 6, 6' und den unteren Rahmenrohren 7, 7' und somit ebenfalls in der Nähe des Schwerpunkts des Motorrads angeordnet, was das Handling weiter verbessert.

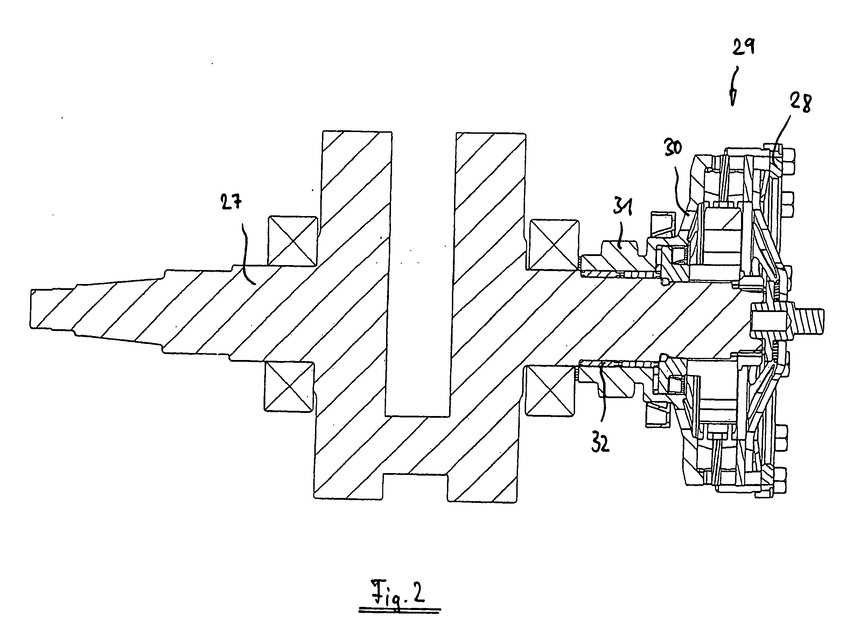

Der Motor 19 des Motorrads 1 ist so eingebaut, dass sich die Kurbelwelle 27 (vgl. Figur 2) in Querrichtung des Motorrads, d. h. senkrecht zur Zeichenebene der Figur 1 und parallel zur Schwingenachse 10 erstreckt. Der Begriff "Querrichtung" kann auch so interpretiert werden, dass die Kurbelwelle quer zur Hauptfahrrichtung und somit quer zur Längsrichtung des Motorrads ist. Die Kurbelwelle 27 ist am besten aus Figur 2 ersichtlich. In Figur 2 ist die Kurbelwelle eines Einzylindermotors dargestellt. Die Erfindung ist selbstverständlich auch für quer eingebaute Mehrzylindermotoren geeignet. Der Kolben (nicht dargestellt) des Motors überträgt eine Kolbenkraft und bewirkt dadurch eine Drehung der Kurbelwelle 27. Vom rechten Ende der in Figur 2 gezeigten Kurbelwelle 27 wird das Drehmoment auf ein Antriebselement 28 einer Mehrscheibenkupplung 29 übertragen.

Im Unterschied zu herkömmlichen Motorrädern, bei denen die Kupplung üblicherweise auf der Getriebeeingangswelle angeordnet ist, ist die Kupplung 29 auf der Kurbelwelle 27 angeordnet. Wenn die Kupplung 29 geschlossen ist, wird das Drehmoment von dem Antriebselement 28 auf einen als "Abtriebselement" fungierenden Kupplungskorb 30 übertragen, der hier einstückig mit einem Primärritzel 31 verbunden ist. Der Kupplungskorb muss natürlich nicht notwendigerweise einstückig mit dem Primärritzel verbunden sein. Denkbar ist an dieser Stelle auch eine Nietverbindung. Der Kupplungskorb 30 bzw. das Primärritzel 31 ist über ein Nadellager 32 auf der Kurbelwelle 27 gelagert.

Im Vergleich zu herkömmlichen Motorrädern, bei denen die Kupplung auf der Getriebeeingangswelle gelagert angeordnet ist, hat eine Anordnung auf der Kurbelwelle den Vorteil, dass dort geringere Drehmomente zu übertragen sind, was eine kompaktere Bauweise der Kupplung ermöglicht.

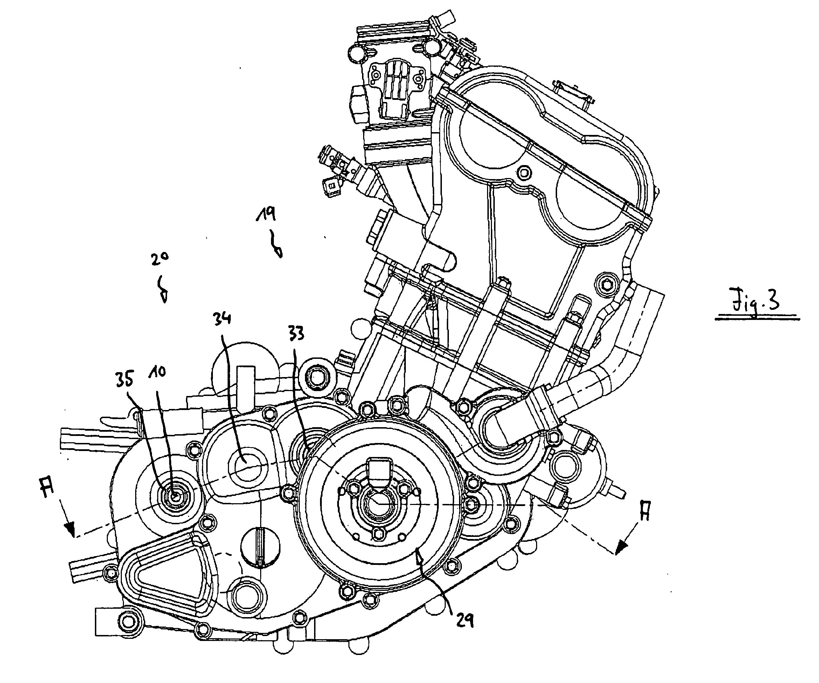

Figur 3 zeigt eine Seitenansicht der Motor-/Getriebeeinheit und zwar von der der in Figur 1 gezeigten Seite gegenüberliegenden Seite, d. h. von der "rechten" Seite des Motorrads 1 aus gesehen. Zu erkennen ist die Lage der Kupplung 29, einer Zwischenwelle 33, einer Getriebeeingangswelle 34 und der koaxial zur Schwingenachse 10 angeordneten Getriebeausgangswelle 35. Ferner ist eine Schnittlinie A-A dargestellt.

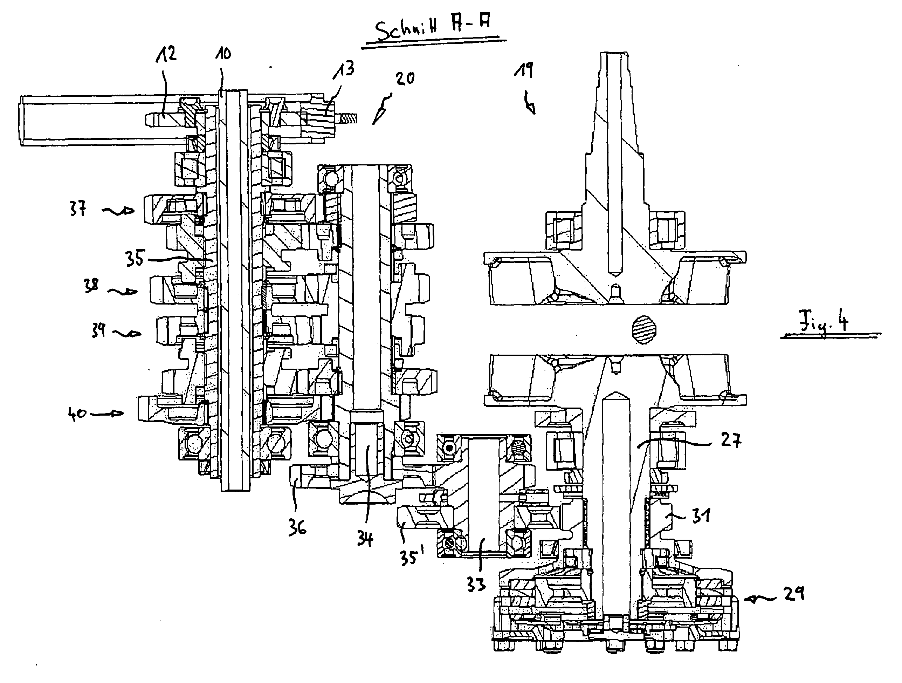

Figur 4 zeigt einen Schnitt durch die Motor-/Getriebeeinheit entlang der Schnittlinie A-A. Wie aus Figur 4 ersichtlich ist, wird das von der Kurbelwelle 27 gelieferte Drehmoment über die Kupplung 29 auf das Primärritzel 31 übertragen und von dem Primärritzel 31 auf ein Zwischenzahnrad 35', das auf der Zwischenwelle 33 angeordnet ist. Das Zwischenzahnrad 35' kämmt mit einem Getriebeeingangsritzel 36, das auf der Getriebeeingangswelle 34 angeordnet ist. Auf der Getriebeeingangswelle 34 und auf der Getriebeausgangswelle 35 sind mehrere schaltbare Zahnradstufen 37 - 40 angeordnet, über die einzelne Gänge des Getriebes 20 geschaltet werden können. In Abhängigkeit von dem eingelegten Gang wird das Drehmoment über eine dieser Zahnradstufen 37 - 40 auf die Getriebeausgangswelle 35 und von dort über das Getriebeausgangsritzel 12 auf die mit dem Hinterrad 3 gekoppelte Kette 13 übertragen.

Wie am besten aus den Figuren 4 bzw. 5 ersichtlich ist, ist die Getriebeausgangswelle 35 eine Hohlwelle. Die Schwingenachse 10 ist durch die Getriebeausgangswelle hindurch gesteckt. Auf einer Seite des Getriebegehäuses 41 erstreckt die Getriebeausgangswelle 35 aus dem Getriebegehäuse 41 heraus. Auf dem herausstehenden Abschnitt der Getriebeausgangswelle 35 ist das Getriebeausgangsritzel 12 angeordnet. Die Getriebeausgangswelle 35 ist mittels zweier Wälzlager 42, 43 im Getriebegehäuse 41 gelagert.

Wie am besten aus Figur 5 ersichtlich ist, erstreckt sich die Schwingenachse 10 durch die Getriebeausgangswelle 35 hindurch und somit auch durch das Getriebegehäuse 41. Enden 44, 45 der Schwingenachse 10 stehen aus dem Getriebegehäuse 41 heraus und sind mittels zweier Kegelrollenlager 46, 47, die hier in O-Anordnung eingebaut sind, im Rahmen 5 des Motorrads 1 gelagert. Bei der Schwingenachse 10 handelt es sich also um eine "Steckachse" die eine einfache Montage und Demontage der Hinterradschwinge 11 ermöglicht.

Die Hinterradschwinge 11 ist mittels einer Klemmverbindung 48 auf der Schwingenachse 10 festgeklemmt und somit fest im Bezug auf die Schwingenachse 10 positioniert. Da die Schwingenachse 10 über die Kegelrollenlager 46, 47 im Rahmen 5 gelagert ist, kann die Hinterradschwinge 11 in Bezug auf den Rahmen 5 um die Schwingenachse 10 verschwenkt werden.

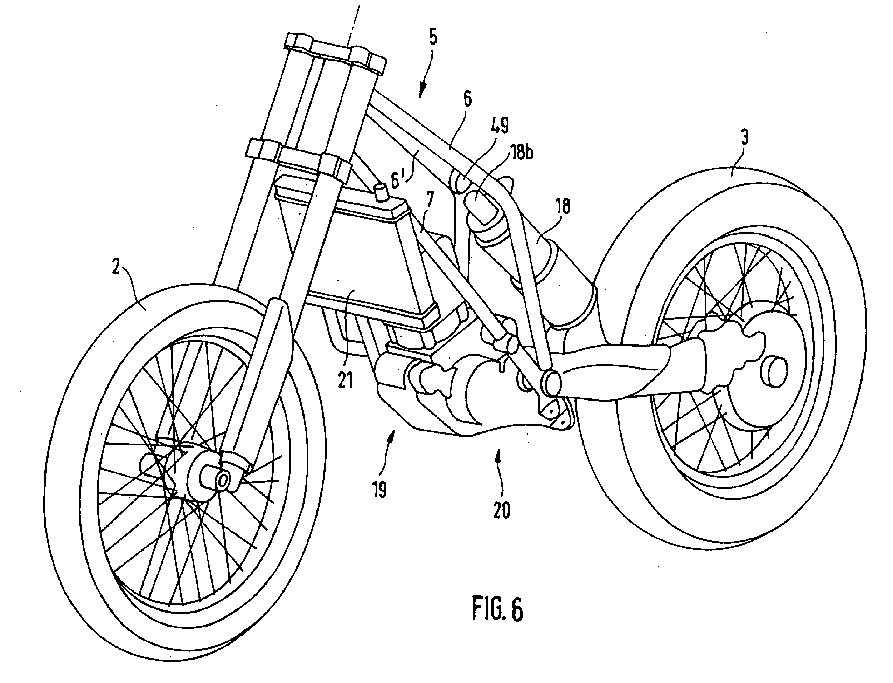

Figur 6 zeigt eine stark schematisierte Darstellung eines Motorrads 1 gemäß der Erfindung in perspektivischer Darstellung. In dieser Darstellung ist besonders gut der flache Einbau des Federbeins 18 zu erkennen. Das vordere Ende 18b des Federbeins 18 ist über eine die beiden oberen Rahmenrohre 6, 6' miteinander verbindenden Querstrebe 49 gelenkig mit dem Rahmen 5 verbunden. Wie bereits erwähnt ergibt sich durch die flache Anordnung des Federbeins 18 eine starke Federbeinprogression, was das Fahrverhalten des Motorrads im Vergleich zu herkömmlichen Motorrädern, bei denen das Federbein steiler eingebaut ist, erheblich verbessert.

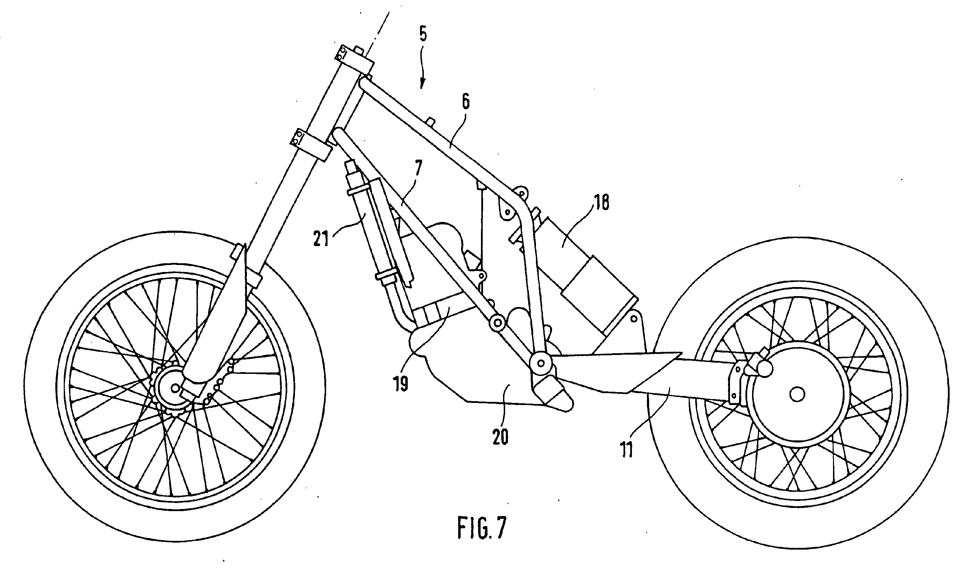

Figur 7 zeigt das Motorrad der Figur 6 in Seitenansicht. Auch hier ist nochmals sehr gut die flache Einbaulage des Federbeins 18 und die sehr einfache Bauweise des Rahmens 5 zu erkennen. Aus den Figuren 6, 7 ist auch sehr gut zu erkennen, dass der Motor 19, das Getriebe 20 und der Kühler 21 als vormontierte "Powerunit" bei der Montage des Motorrads 1 von unten her in den Rahmen 5 eingesetzt werden können, da sich im Unterschied zu herkömmlichen Motorrädern unterhalb des Motors 19 bzw. des Getriebes 20 keinerlei Rahmenrohre "nach hinten" zur Anlenkstelle der Hinterradschwinge erstrecken.

Wie aus den Figuren 6 und 8 ersichtlich ist, ermöglicht diese Rahmenkonzeption auch die Anordnung eines durchgehenden Kühlers 21 unterhalb der unteren Rahmenrohre 7, 7'.

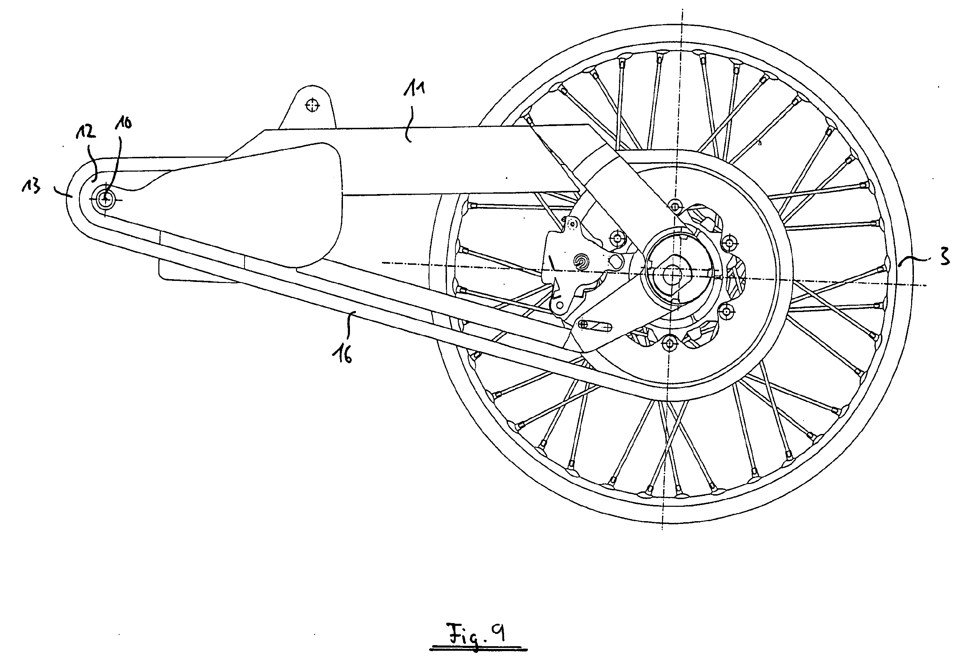

Figur 9 zeigt eine Seitenansicht der Hinterradschwinge 11 des Hinterrads 3 in vergrößerter Darstellung.

## Patentansprüche

1. Motorrad (1) mit
• einem Rahmen (5),
• einer Hinterradschwinge (11), die auf einer Schwingenachse (10) schwenkbar in Bezug auf den Rahmen (5) angeordnet ist,
• einem Getriebe (20), das ein Getriebegehäuse (41) und eine aus dem Getriebegehäuse (41) herausstehende Getriebeausgangswelle (35) aufweist, auf der ein Getriebeausgangsritzel (12) angeordnet ist, welches über ein Zugmittel (13) mit einem im Hinterradbereich des Motorrads (1) angeordneten gezahnten Rad, insbesondere einem Kettenrad (14), gekoppelt ist, wobei das Getriebeausgangsritzel (12) koaxial zur Schwingenachse (10) angeordnet ist,
**dadurch gekennzeichnet, dass** der Rahmen (5) mindestens zwei sich schneidende linke Rahmenrohre (6, 7) und mindestens zwei sich schneidende rechte Rahmenrohre (6', 7') aufweist und dass die Schwingenachse (10) sich durch den Schnittpunkt der linken Rahmenrohre (6, 7) und durch den Schnittpunkt der rechten Rahmenrohre (6', 7') erstreckt.

2. Motorrad (1) nach Anspruch 1, **dadurch gekennzeichnet, dass** ein Motor (19) vorgesehen ist und der Motor (19) und das Getriebe (20) im Bereich zwischen den linken und rechten Rahmenrohren (6, 7, 6', 7') angeordnet ist.

3. Motorrad (1) nach Anspruch 1 oder 2, **dadurch gekennzeichnet, dass** der Rahmen (5) ein linkes und ein rechtes unteres Rahmenrohr (7, 7') aufweist, die in einer Seitenansicht des Motorrads (1) gesehen, im wesentlichen gerade sind und die sich von der Schwingenachse (10) nach vorne oben in einen Bereich unterhalb eines Lenkers (8) des Motorrads (1) erstrecken.

4. Motorrad (1) nach einem der vorangehenden Ansprüche, **dadurch gekennzeichnet, dass** der Rahmen (5) ein linkes und ein rechtes oberes Rahmenrohr (6, 6') aufweist, die oberhalb der unteren Rahmenrohre (7, 7') angeordnet sind und die sich ebenfalls von einem Bereich unterhalb des Lenkers (8) zur Schwingenachse (10) nach hinten unten erstrecken.

5. Motorrad (1) nach Anspruch 4, **dadurch gekennzeichnet, dass** die oberen Rahmenrohre (6, 6') gebogen sind.

6. Motorrad (1) nach einem der vorangehenden Ansprüche, **dadurch gekennzeichnet, dass** ein Kühler (21) vorgesehen ist, der in einem Bereich unterhalb der unteren Rahmenrohre (7, 7') und vorderhalb des Motors (19) angeordnet ist.

7. Motorrad (1) nach einem der vorangehenden Ansprüche, **dadurch gekennzeichnet, dass** ein Luftfilter (23) vorgesehen ist, der in einem lenkernahen Bereich zwischen den linken und den rechten Rahmenrohren (6, 7, 6', 7') und zwischen den unteren und den oberen Rahmenrohren (6, 6'; 7, 7') angeordnet ist.

8. Motorrad (1) nach einem der vorangehenden Ansprüche, **dadurch gekennzeichnet, dass** eine Bordbatterie (26) vorgesehen ist, die in einem schwingenachsennahen Bereich zwischen den oberen und den unteren Rahmenrohren (6, 6'; 7, 7') oberhalb des Getriebes angeordnet ist.

9. Motorrad (1) nach einem der vorangehenden Ansprüche, **dadurch gekennzeichnet, dass** zwischen der Hinterradschwinge (11) und dem Rahmen (5) ein Federbein (18) angeordnet ist, welches die Hinterradschwinge (11) gegenüber dem Rahmen (5) federt und dämpft.

10. Motorrad (1) nach Anspruch 9, **dadurch gekennzeichnet, dass,** in einer Seitenansicht des Motorrads (1) gesehen, vordere Abschnitte (6a) der oberen Rahmenrohre (6, 6') in einer im Wesentlichen geraden Verlängerung zu einer Längsachse des Federbeins (18) stehen.

11. Motorrad (1) nach einem der vorangehenden Ansprüche, **dadurch gekennzeichnet, dass** ein Kraftstofftank (24) vorgesehen ist, der in einem Bereich oberhalb des Federbeins (18) und unterhalb einer Sitzbank (25) des Motorrads (1) angeordnet ist.

12. Motorrad (1) nach Anspruch 11, **dadurch gekennzeichnet, dass** der Kraftstofftank (24) an seiner Oberseite einen Tankdeckel aufweist, der durch Abnehmen der Sitzbank (25) zugänglich ist.

13. Motorrad (1) nach einem der Ansprüche 1 bis 12, **dadurch gekennzeichnet, dass** sich die Schwingenachse (10) durch das Getriebegehäuse (41) hindurch erstreckt und auf gegenüberliegenden Seiten des Getriebegehäuses (41) aus dem Getriebegehäuse (41) heraussteht.

14. Motorrad (1) nach einem der Ansprüche 1 bis 13, **dadurch gekennzeichnet, dass** die Getriebeausgangswelle (35) im Getriebegehäuse (41) durch Wälzlager (42, 43) gelagert ist.

15. Motorrad (1) nach einem der vorangehenden Ansprüche, **dadurch gekennzeichnet, dass** die Getriebeausgangswelle (35) eine Hohlwelle ist.

16. Motorrad (1) nach einem der vorangehenden Ansprüche, **dadurch gekennzeichnet, dass** die Schwingenachse (10) sich durch die Getriebeausgangswelle (35) hindurch erstreckt.

17. Motorrad (1) nach einem der vorangehenden Ansprüche, **dadurch gekennzeichnet, dass** Enden (44, 45) der Schwingenachse (10) schwenkbar gelagert sind.

18. Motorrad (1) nach Anspruch 17, **dadurch gekennzeichnet, dass** die Enden (44, 45) der Schwingenachse (10) durch Wälzlager (46, 47) gelagert sind.

19. Motorrad (1) nach Anspruch 18, **dadurch gekennzeichnet, dass** die Wälzlager (46, 47) Kegelrollenlager sind.

20. Motorrad (1) nach Anspruch 19, **dadurch gekennzeichnet, dass** die Kegelrollenlager (46, 47) in O-Anordnung angeordnet sind.

21. Motorrad (1) nach einem der vorangehenden Ansprüche, **dadurch gekennzeichnet, dass** die Hinterradschwinge (11) mittels einer Klemmverbindung (48) an der Schwingenachse (10) fixiert ist.

22. Motorrad (1) nach einem der Ansprüche 2 bis 21, **dadurch gekennzeichnet, dass** der Motor (19) eine sich in einer Querrichtung des Motorrads (1) erstreckende Kurbelwelle (27) aufweist.

23. Motorrad (1) nach einem der vorangehenden Ansprüche, **dadurch gekennzeichnet, dass** eine Kupplung (29) vorgesehen ist, die koaxial zur Kurbelwelle (27) angeordnet ist.

24. Motorrad (1) nach Anspruch 23, **dadurch gekennzeichnet, dass** die Kupplung (29) auf der Kurbelwelle (27) angeordnet ist.

## Claims

1. A motorcycle (1) comprising
• a frame (5),
• a swing arm rear suspension (11) disposed on a swing-arm axle (10) so as to be pivotable relative to the frame (5), and
• a gear unit (20) comprising a gearbox (41) and an output shaft (35) which extends from the gearbox (41) and bears a pinion (12) coupled by a tension means (13) to a toothed wheel (14), especially a chain wheel, disposed in the rear-wheel region of the motorcycle (1), wherein the gear output pinion (12) is coaxial with the swing arm axis or axle (10),
**characterised in that** the frame (5) comprises at least two intersecting left tubes (6, 7) and at least two intersecting right tubes (6', 7') and the axis (10) extends through the point of intersection of the left frame tubes (6, 7) and through the point of intersection of the right frame tubes (6', 7').

2. A motorcycle (1) according to claim 1, **characterised in that** an engine (19) is provided and the engine (19) and the gear unit (20) are disposed in the region between the left and right frame tubes (6, 7, 6', 7').

3. A motorcycle according to claim 1 or claim 2, **characterised in that** the frame (5) comprises a left and a right bottom tube (7, 7') which, viewed from the side of the motorcycle (1), are substantially straight and extend from the axis (10) forwards and upwards into a region underneath a handlebar (8) of the motorcycle (1).

4. A motorcycle (1) according to any of the preceding claims, **characterised in that** the frame (5) comprises a left and a right top tube (6, 6') disposed above the bottom frame tubes (7, 7') and likewise extending from a region under the handlebar (8) backwards and downwards to the axis (10).

5. A motorcycle (1) according to claim 4, **characterised in that** the top frame tubes (6, 6') are bent.

6. A motorcycle (1) according to any of the preceding claims, **characterised in that** a radiator (21) is disposed in a region under the bottom frame tubes (7, 7') and in front of the engine (19).

7. A motorcycle according to any of the preceding claims, **characterised in that** an air filter (23) is disposed in a region near the handlebar between the left and the right frame tubes (6, 7, 6', 7') and between the bottom and top frame tubes (6, 6'; 7, 7').

8. A motorcycle according to any of the preceding claims, **characterised in that** an on-board battery (26) is disposed in a region near the swing-arm axis between the top and bottom frame tubes (6, 6'; 7, 7') above the gear unit.

9. A motorcycle according to any of the preceding claims, **characterised in that** a spring leg (18) is disposed between the swing arm rear suspension (11) and the frame (5) and cushions and damps the swing arm rear suspension (11) relative to the frame (5).

10. A motorcycle (1) according to claim 9, **characterised in that**, viewed from the side of the motorcycle (1) front portions (6a) of the top frame tubes (6, 6') lie substantially in a straight prolongation of a longitudinal axis of the spring leg (18).

11. A motorcycle (1) according to any of the preceding claims, **characterised in that** a fuel tank (24) is disposed in a region above the spring leg (18) and below a seat bench (25) on the motorcycle (1).

12. A motorcycle according to claim 11, **characterised in that** the fuel tank (24) at the top has a lid which is accessible by removing the seat bench (25).

13. A motorcycle according to any of claims 1 to 12, **characterised in that** the axis (10) extends through the gearbox (41) and projects out of the gearbox (41) on opposite sides thereof.

14. A motorcycle according to any of claims 1 to 13, **characterised in that** the gear output shaft (35) is mounted in the gearbox (41) on rolling bearings (42, 43).

15. A motorcycle according to any of the preceding claims, **characterised in that** the gear output shaft (35) is a hollow shaft.

16. A motorcycle (1) according to any of the preceding claims, **characterised in that** the swing arm axle (10) extends through the gear output shaft (35).

17. A motorcycle (1) according to any of the preceding claims, **characterised in that** ends (44, 45) of the swing arm axle (10) are pivotably mounted.

18. A motorcycle (1) according to claim 17, **characterised in that** the ends (44, 45) of the swing arm axle (10) are mounted on rolling bearings (46, 47).

19. A motorcycle according to claim 18, **characterised in that** the rolling bearings (46, 47) are tapered.

20. A motorcycle (1) according to claim 19, **characterised in that** the tapered bearings (46, 47) are disposed in an O arrangement.

21. A motorcycle (1) according to any of the preceding claims, **characterised in that** the swing arm rear suspension (11) is fixed to the axle (10) by a clamp connection (48).

22. A motorcycle according to any of claims 2 to 21, **characterised in that** the engine (19) has a crankshaft (27) extending in a transverse direction of the motorcycle (1).

23. A motorcycle (1) according to any of the preceding claims, **characterised in that** a clutch (29) is disposed coaxially with the crankshaft (27).

24. A motorcycle (1) according to claim 23, **characterised in that** the clutch (29) is mounted on the crankshaft (27).

## Revendications

1. Motocyclette comprenant
- un cadre (5),
- un bras oscillant arrière (11), pouvant basculer par rapport au cadre (5) autour d'un axe d'oscillation (10),
- une boîte de vitesses (20), présentant un carter de boîte (41) et, dépassant de ce carter, un arbre de sortie de boîte (35) sur lequel est monté un pignon de sortie de boîte (12) accouplé par un moyen de traction (13) à un pignon disposé dans la zone de la roue arrière de la motocyclette (1), notamment un pignon à chaîne (14), le pignon de sortie de boîte (12) étant coaxial à l'axe d'oscillation (10),
**caractérisée en ce que**
le cadre (5) présente au moins deux tubes de cadre (6, 7) gauches qui se coupent, au moins deux tubes de cadre (6', 7') droits qui se coupent, l'axe d'oscillation (10) passant à travers le point d'intersection des tubes gauches (6, 7) et à travers le point d'intersection des tubes droits (6', 7').

2. Motocyclette selon la revendication 1,
**caractérisée en ce qu'**
elle possède un moteur (19) qui, avec la boîte de vitesses (20) est disposé dans la zone située entre les tubes de cadre gauches (6, 7) et droits (6', 7').

3. Motocyclette selon la revendication 1 ou 2,
**caractérisée en ce que**
le cadre (5) présente des tubes inférieurs de cadre (7, 7') gauche et droit respectivement qui, quand on observe latéralement la motocyclette, sont essentiellement rectilignes et, partant de l'axe d'oscillation (10) s'étendent en montant vers l'avant, jusqu'à une zone située en dessous du guidon (8) de la motocyclette (1).

4. Motocyclette selon une des revendications précédentes,
**caractérisée en ce que**
le cadre présente des tubes supérieurs de cadre (6, 6') gauche et droit respectivement, qui sont disposés au-dessus des tubes inférieurs de cadre (7, 7') et qui, partant également d'une zone située en dessous du guidon (8) s'étendent en descendant vers l'arrière, jusqu'à l'axe d'oscillation (10).

5. Motocyclette selon la revendication 4,
**caractérisée en ce que**
les tubes supérieurs de cadre (6, 6') sont coudés.

6. Motocyclette selon une des revendications précédentes,
**caractérisée en ce qu'**
il est prévu un radiateur (21) disposé dans une zone située en dessous des tubes inférieurs de cadre (7, 7') et en avant du moteur (19).

7. Motocyclette selon une des revendications précédentes,
**caractérisée en ce qu'**
il est prévu un filtre à air (23) disposé dans une zone proche du guidon, entre les tubes de cadre gauches (6, 7) et droits (6', 7') et entre les tubes supérieurs de cadre (6, 6') et inférieurs (7, 7').

8. Motocyclette selon une des revendications précédentes,
**caractérisée en ce qu'**
il est prévu une batterie de bord (26) disposée dans une zone proche de l'axe d'oscillation entre les tubes de cadre supérieurs (6, 6') et inférieurs (7, 7'), au-dessus de la boîte de vitesses.

9. Motocyclette selon une des revendications précédentes,
**caractérisée en ce qu'**
entre le bras oscillant arrière (11) et le cadre (5) est montée une jambe de force élastique (18) qui assure la suspension et l'amortissement du bras (11) par rapport au cadre (5).

10. Motocyclette selon la revendication 9,
**caractérisée en ce que**
quand la motocyclette (1) est observée latéralement, les sections avant (6a) des tubes supérieurs de cadre (6, 6') sont essentiellement dans le prolongement rectiligne de l'axe longitudinal de la jambe de force élastique (18).

11. Motocyclette selon une des revendications précédentes,
**caractérisée en ce qu'**
il est prévu un réservoir de carburant (24) disposé dans une zone située au-dessus de la jambe de force élastique (18) et en dessous d'un siège (25) de la motocyclette.

12. Motocyclette selon la revendication 11,
**caractérisée en ce que**
le réservoir de carburant (24) présente sur sa face supérieure un couvercle qui est accessible par enlèvement du siège (25).

13. Motocyclette selon une des revendications précédentes,
**caractérisée en ce que**
l'axe d'oscillation (10) passe à travers le carter de boîte de vitesses (41) et fait saillie sur les deux côtés opposés de ce carter (41).

14. Motocyclette selon une des revendications précédentes,
**caractérisée en ce que**
l'arbre de sortie de boîte de vitesses (35) est monté dans le carter (41) de cette boîte, par des paliers de roulement (42, 43).

15. Motocyclette selon une des revendications précédentes,
**caractérisée en ce que**
l'arbre de sortie de boîte de vitesses (35) est un arbre creux.

16. Motocyclette selon une des revendications précédentes,
**caractérisée en ce que**
l'axe d'oscillation (10) passe à travers l'arbre de sortie de boîte de vitesses (35).

17. Motocyclette selon une des revendications précédentes,
**caractérisée en ce que**
les extrémités (44, 45) de l'axe d'oscillation (10) sont montées basculantes.

18. Motocyclette selon la revendication 17,
**caractérisée en ce que**
les extrémités (44, 45) de l'axe d'oscillation (10) sont montées dans des paliers de roulement (46, 47).

19. Motocyclette selon la revendication 18,
**caractérisée en ce que**
les paliers de roulement (46, 47) sont des roulements à galets coniques.

20. Motocyclette selon la revendication 19,
**caractérisée en ce que**
les roulements à galets coniques (46, 47) sont montés en opposition.

21. Motocyclette selon une des revendications précédentes,
**caractérisée en ce que**
le bras oscillant arrière (11) est fixé sur l'axe d'oscillation (10) par une liaison à serrage (48).

22. Motocyclette selon une des revendications 2 à 21,
**caractérisée en ce que**
le moteur (19) a son vilebrequin (27) disposé transversalement à la motocyclette (1).

23. Motocyclette selon une des revendications précédentes,
**caractérisée en ce qu'**
il est prévu un embrayage (29) qui est coaxial au vilebrequin (27).

24. Motocyclette selon la revendication 23,
**caractérisée en ce que**
l'embrayage (29) est monté sur le vilebrequin (27).
